# EUROPEAN PATENT APPLICATION

(11) **EP 4 497 782 A1**
(43) Date of publication of application: **29.01.2025**
(21) Application number: 23796261.8
(22) Date of filing: 21.04.2023
(51) Int. Cl.: C08L 11/00, C08K 3/06, C08K 3/22, C08K 5/18, C08K 5/37, C08K 5/405, C08L 71/03

(54) **RUBBER COMPOSITION, VULCANIZED MOLDED BODY, AND VULCANIZATE**

(30) Priority: 28.04.2022 JP 2022074313
(71) Applicant: Denka Company Limited, Tokyo 103-8338 (JP)
(72) Inventor: SAKAI, Yuki, Tokyo 103-8338 (JP)
(74) Representative: Gulde & Partner
(86) International application number: PCT/JP2023/015872
(87) International publication number: WO 2023/210519

(57) **Abstract**

The present invention aims to provide a rubber composition which allows to obtain a vulcanized molded body having excellent processing safety and having excellent oil resistance, freeze resistance, and flex fatigue resistance, as well as a vulcanize and a vulcanized molded body having excellent oil resistance, freeze resistance, and flex fatigue resistance.

According to the present invention, provided is a rubber composition, containing a chloroprene-based rubber and an epichlorohydrin-based rubber, in which: the rubber composition contains 5 to 95 parts by mass of the chloroprene-based rubber, 5 to 95 parts by mass of the epichlorohydrin-based rubber, and 0.1 to 10 parts by mass of a compound having a p-phenylenediamine structure, when an amount of a rubber contained in the rubber composition is taken as 100 parts by mass; and the chloroprene-based rubber contains a chloroprene-based rubber having a content of an unsaturated nitrile monomer unit of less than 25 mass%.

## Description

### Technical Field

The present invention relates to a rubber composition, a vulcanizate, and a vulcanized molded body.

### Background Art

Chloroprene-based rubbers have excellent characteristics and are used in a wide range of fields such as automobile parts, adhesives, and various industrial rubber parts by taking advantage of these characteristics. Rubber compositions described in Patent Literatures 1 to 3 below are known as techniques in which a chloroprene-based rubber can be used.

Further, rubber compositions containing a chloroprene-based rubber and a rubber other than the chloroprene-based rubber have also been studied. For example, a rubber composition containing (a1) an epichlorohydrin rubber and (a2) a chloroprene rubber is disclosed in Patent Literature 4.

In addition, known are a wide variety of agents, which are added to rubber compositions to improve the physical properties of the vulcanizate and vulcanized molded body obtained from the rubber compositions. For example, it is disclosed in Non-patent Literature 1 that the combination of an epichlorohydrin-based rubber and a compound having a p-phenylenediamine structure ("Nocrac 6C", made by OOUCHI SHINKO CHEMICAL INDUSTRIAL CO., LTD.) deteriorates ozone resistance.

### Citation List

### Patent Literature

Patent Literature 1: JP-A-2016-23191
Patent Literature 2: JP-A-2012-111899
Patent Literature 3: JP-A-H9-268239
Patent Literature 4: JP-A-2015-44965

### Non-patent Literature

Non-patent Literature 1: "NOC Technical Note No. 349 Effect of Anti-Aging Agent on Epichlorohydrin Rubber (2)", Journal of The Society of Rubber Industry, Japan, Vol. 63, No. 1, pp. 61-62, 1990.

### Summary of Invention

### Technical Problem

Rubber compositions containing a chloroprene-based rubber may be required to simultaneously have various characteristics at a high level in a vulcanized molded body of the rubber composition, but it has been difficult to obtain a rubber composition which allows to obtain a vulcanized molded body having excellent processing safety and having excellent oil resistance, freeze resistance, and flex fatigue resistance.

The present invention has been made in view of these circumstances, and aims to provide a rubber composition which allows to obtain a vulcanized molded body having excellent processing safety and having excellent oil resistance, freeze resistance, and flex fatigue resistance, as well as a vulcanize and a vulcanized molded body having excellent oil resistance, freeze resistance, and flex fatigue resistance.

### Solution to Problem

According to the present invention, provided is a rubber composition, containing a chloroprene-based rubber and an epichlorohydrin-based rubber, in which: the rubber composition contains 5 to 95 parts by mass of the chloroprene-based rubber, 5 to 95 parts by mass of the epichlorohydrin-based rubber, and 0.1 to 10 parts by mass of a compound having a p-phenylenediamine structure, when an amount of a rubber contained in the rubber composition is taken as 100 parts by mass; and the chloroprene-based rubber contains a chloroprene-based rubber having a content of an unsaturated nitrile monomer unit of less than 25 mass%.

The inventors have conducted intensive studies and found that the rubber composition, which allows to obtain a vulcanizate and a vulcanized molded body having excellent processability and processing safety and having excellent oil resistance, freeze resistance, ozone resistance, flex fatigue resistance, and compression set resistance, can be obtained by setting the contents of the chloroprene-based rubber, the epichlorohydrin-based rubber, and the compound having a p-phenylenediamine structure within specific numerical ranges, although it has been conventionally known that a combination of the epichlorohydrin-based rubber and the compound having a p-phenylenediamine structure deteriorates ozone resistance and the like, thereby leading to the completion of the present invention.

Various embodiments of the present invention are illustrated below. The embodiments shown below can be combined with each other.
[1] A rubber composition, containing a chloroprene-based rubber and an epichlorohydrin-based rubber, in which: the rubber composition contains 5 to 95 parts by mass of the chloroprene-based rubber, 5 to 95 parts by mass of the epichlorohydrin-based rubber, and 0.1 to 10 parts by mass of a compound having a p-phenylenediamine structure, when an amount of a rubber contained in the rubber composition is taken as 100 parts by mass; and the chloroprene-based rubber contains a chloroprene-based rubber having a content of an unsaturated nitrile monomer unit of less than 25 mass%.
[2] The rubber composition of [1], in which the compound having a p-phenylenediamine structure is represented by the following formula (1). 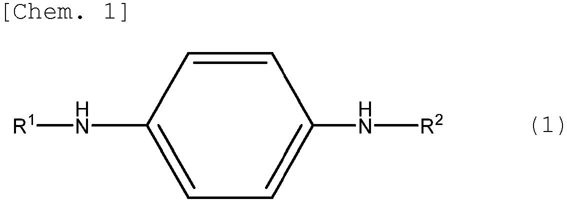 (In formula (1), R¹ and R² each represent an organic group, and at least one of R¹ and/or R² includes an aromatic ring structure.)
[3] The rubber composition of [1] or [2], in which the compound having a p-phenylenediamine structure includes at least one compound selected from a group consisting of N-phenyl-N'-(1,3-dimethylbutyl)-p-phenylenediamine, N-phenyl-N'-isopropyl-p-phenylenediamine, N-1-methylheptyl-N'-phenyl-p-phenylenediamine, N-phenyl-N'-(3-methacryloyloxy-2-hydroxypropyl)-p-phenylenediamine, N,N'-di-2-naphthyl-p-phenylenediamine, N,N'-diphenyl-p-phenylenediamine, p-(p-toluenesulfonylamido)diphenylamine, and N-cyclohexyl-N'-phenyl-p-phenylenediamine.
[4] The rubber composition of any one of [1] to [3], in which the unsaturated nitrile monomer unit is an acrylonitrile monomer unit.
[5] The rubber composition of any one of [1] to [4], in which: the chloroprene-based rubber contains a rubber A and a rubber B; the rubber A is a rubber having 1 to 20 mass% of the unsaturated nitrile monomer unit, 60 to 99 mass% of a chloroprene monomer unit, and 0 to 20 mass% of a monomer unit other than chloroprene monomer and unsaturated nitrile monomer; and the rubber B is a rubber having 80 to 100 mass% of the chloroprene monomer unit and 0 to 20 mass% of the monomer unit other than chloroprene monomer and unsaturated nitrile monomer.
[6] The rubber composition of any one of [1] to [5], containing 20 to 99 mass% of the rubber A and 1 to 80 mass% of the rubber B when an amount of the chloroprene-based rubber contained in the rubber composition is taken as 100 mass%.
[7] The rubber composition of any one of [1] to [6], in which the epichlorohydrin-based rubber contains 5 to 90 mol% of an ethylene oxide monomer unit.
[8] The rubber composition of any one of [1] to [7], containing 0.1 to 20 parts by mass of an acid acceptor when the amount of the rubber contained in the rubber composition is taken as 100 parts by mass, in which the acid acceptor includes at least one selected from a group consisting of a hydrotalcite compound, a magnesium-aluminum-based solid solution, zinc oxide, magnesium oxide, lead oxide, trilead tetroxide, iron trioxide, titanium dioxide, and calcium oxide.
[9] The rubber composition of any one of [1] to [8], containing at least one compound selected from a group consisting of sulfur, trimethylthiourea, ethylenethiourea, diphenylthiourea, diethylthiourea, dibutylthiourea, 1,3-trimethylene-2-thiourea, and 3-methylthiazolidine-2-thione.
[10] The rubber composition of any one of [1] to [9], containing at least one compound selected from a group consisting of 2-mercaptobenzimidazole, 2-mercaptomethylbenzimidazole, and zinc salt of 2-mercaptobenzimidazole.
[11] A vulcanizate of the rubber composition of any one of [1] to [10] .
[12] A vulcanized molded body using the vulcanizate of [11] .

### Advantageous Effects of Invention

According to the rubber composition of the present invention, it is possible to obtain a vulcanizate and a vulcanized molded body having excellent processing safety and having excellent oil resistance, freeze resistance, and flex fatigue resistance. Furthermore, the obtained vulcanizate and vulcanized molded body can be used as various members that require excellent oil resistance, freeze resistance, flex fatigue resistance, and the like, taking advantage of the characteristics. Specifically, the vulcanizate and the vulcanized molded body of one embodiment of the present invention can be suitably used as industrial parts such as accumulators, boots, hoses, belts, vibration-proofing rubber, damping materials, electric wires, gaskets, oil seals, packings, diaphragms, and sponges. In particular, they can be used as members for accumulators, diaphragms, and hoses. In particular, the vulcanizate and the vulcanized molded body of one embodiment of the present invention can be used as members that are used in an environment where oil resistance, freeze resistance, and/or flex fatigue resistance are required.

### Description of Embodiments

Hereinafter, the present invention will be described in detail by exemplifying embodiments of the present invention. The present invention is not limited by these descriptions. Various features of embodiments of the present invention described below can be combined with each other. In addition, the invention is established independently for each feature.

### 1. Rubber Composition

The rubber composition of the present invention contains 5 to 95 parts by mass of chloroprene-based rubber, 5 to 95 parts by mass of epichlorohydrin-based rubber, and 0.1 to 10 parts by mass of a compound having a p-phenylenediamine structure, with respect to 100 parts by mass of the rubbers contained in the rubber composition. According to the present invention, by setting the amounts of the chloroprene-based rubber, the epichlorohydrin-based rubber, and the compound having a p-phenylenediamine structure contained in the rubber composition to specific numerical ranges and specifying that the chloroprene-based rubber contains a specific type of chloroprene-based rubber, it is possible to obtain a vulcanizate and a vulcanized molded body having excellent processing safety and having excellent oil resistance, freeze resistance, and flex fatigue resistance. Furthermore, according to the rubber composition of one embodiment of the present invention, it is also possible to obtain a vulcanizate and a vulcanized molded body having excellent processability and processing safety and having excellent oil resistance, freeze resistance, ozone resistance, flex fatigue resistance, and compression set resistance.

### 1.1 Chloroprene-based Rubber

The chloroprene-based rubber of the present invention refers to a rubber having a chloroprene-based polymer having chloroprene (2-chloro-1,3-butadiene) as a monomer unit (monomer unit = structural unit). Examples of the chloroprene-based polymer include homopolymers of chloroprene, and copolymers of chloroprene (copolymers of chloroprene and monomers copolymerizable with chloroprene). The polymer structure of the chloroprene-based polymer is not particularly limited.

Note that commercially available 2-chloro-1,3-butadiene may contain a small amount of 1-chloro-1,3-butadiene as an impurity. Such 2-chloro-1,3-butadiene containing a small amount of 1-chloro-1,3-butadiene can also be used as the chloroprene monomer of one embodiment of the present invention.

The rubber composition of the present invention may contain one or more types of chloroprene-based rubbers. The chloroprene-based rubber of one embodiment of the present invention includes a chloroprene-based rubber having a content of an unsaturated nitrile monomer unit of less than 25 mass%. The content of the unsaturated nitrile monomer unit is, for example, 0, 0.1, 0.2, 0.5, 1, 2, 5, 10, 15, 20, 24 mass%, or less than 25 mass%, and may be in the range between the two values exemplified herein. The chloroprene-based rubber of one embodiment of the present invention contains the unsaturated nitrile monomer unit, and thus the obtained vulcanizate and vulcanized molded body have more sufficient oil resistance. In addition, by setting the content of the unsaturated nitrile monomer unit to the above-described lower limit or less, the obtained vulcanizate and vulcanized molded body have more sufficient freeze resistance.

When the rubber composition of one embodiment of the present invention contains two or more types of chloroprene-based rubbers, the total content of the unsaturated nitrile monomer unit contained in the two or more types of chloroprene-based rubbers is preferably less than 25 mass% with respect to 100 mass% of the total of the two or more types of chloroprene-based rubbers contained in the rubber composition. The content of the unsaturated nitrile monomer unit in the chloroprene-based rubber of one embodiment of the present invention is, for example, 0, 0.1, 0.2, 0.5, 1, 2, 5, 10, 15, 20, 24 mass%, or less than 25 mass%, and may be in the range between the two values exemplified herein.

Examples of the unsaturated nitrile monomer unit of one embodiment of the present invention include an acrylonitrile monomer unit, a methacrylonitrile monomer unit, an ethacrylonitrile monomer unit, and a phenylacrylonitrile monomer unit. The chloroprene-based rubber of one embodiment of the present invention can contain one or more types of the unsaturated nitrile monomer units. From the viewpoint of obtaining excellent moldability as well as obtaining excellent mechanical properties and oil resistance in a vulcanized molded article, the unsaturated nitrile monomer unit preferably contains the acrylonitrile monomer unit, and is more preferably the acrylonitrile monomer unit.

The content of the unsaturated nitrile monomer unit contained in the chloroprene-based rubber can be calculated from the content of nitrogen atoms in the chloroprene-based rubber. Specifically, the content of nitrogen atoms in 100 mg of chloroprene-based rubber can be measured using an elemental analyzer (Sumigraph 220F, made by Sumika Chemical Analysis Service, Ltd.) to calculate the content of the structure derived from the unsaturated nitrile monomer. Elemental analysis measurements can be performed under the following conditions. For example, the electric furnace temperature is set to 900°C for the reaction furnace and 600°C for the reduction furnace, the column temperature is set to 70°C, and the detector temperature is set to 100°C, oxygen is flowed at 0.2 mL/min as a combustion gas and helium is flowed at 80 mL/min as a carrier gas. A calibration curve can be created using aspartic acid (10.52%), which has a known nitrogen content, as a reference material.

The chloroprene-based rubber of one embodiment of the present invention preferably contains 60 to 100 mass% of a chloroprene monomer unit when the amount of the chloroprene-based rubber contained in the rubber composition is taken as 100 mass%. The content of the chloroprene monomer unit in the chloroprene-based rubber is, for example, 60, 65, 70, 75, 80, 85, 90, 95, 99, or 100 mass%, and may be in the range between the two values exemplified herein. By setting the content of the chloroprene monomer unit within the above-described numerical range, a rubber composition, which allows to obtain a vulcanizate and a vulcanized molded body having a better balance between mechanical properties and freeze resistance, can be obtained. As described above, the rubber composition of one embodiment of the present invention can contain two or more types of chloroprene-based rubbers. When the rubber composition contains two or more types of chloroprene-based rubbers, the total content of the chloroprene monomer unit contained in the two or more types of chloroprene-based rubbers is preferably within the above-described numerical range, with respect to the total of 100 mass% of the two or more types of chloroprene-based rubbers contained in the rubber composition.

The chloroprene-based rubber of one embodiment of the present invention can also have a monomer unit other than the chloroprene monomer unit and the unsaturated nitrile monomer unit. The monomer unit other than the chloroprene monomer and the unsaturated nitrile monomer are not particularly limited as long as they can be copolymerized with chloroprene monomer or with chloroprene monomer and unsaturated nitrile monomer, and examples thereof include esters of (meth)acrylic acid (methyl (meth)acrylate, butyl (meth)acrylate, 2-ethylhexyl (meth)acrylate, etc.), hydroxyalkyl (meth)acrylate (2-hydroxymethyl (meth)acrylate, 2-hydroxyethyl (meth)acrylate, 2-hydroxypropyl (meth)acrylate, etc.), 2,3-dichloro-1,3-butadiene, 1-chloro-1,3-butadiene, butadiene, isoprene, ethylene, styrene, and sulfur.

The chloroprene-based rubber of one embodiment of the present invention can contain 0 to 20 mass% of monomer units other than the chloroprene monomer and the unsaturated nitrile monomer, when the amount of the chloroprene-based rubber is taken as 100 mass%. The content of monomer units other than the chloroprene monomer and the unsaturated nitrile monomer in chloroprene-based rubber is, for example, 0, 2, 4, 6, 8, 10, 12, 14, 16, 18, or 20 mass%, and may be in the range between the two values exemplified herein. By adjusting the copolymerization amounts of monomers other than chloroprene monomer and unsaturated nitrile monomer within this range, the effect of copolymerizing these monomers can be exhibited without impairing the characteristics of the rubber composition obtained. Further, the chloroprene-based rubber of one embodiment of the present invention can also be composed only of the chloroprene monomer unit and the unsaturated nitrile monomer unit. Note that, as described above, the rubber composition of one embodiment of the present invention can contain two or more types of chloroprene-based rubbers. When the rubber composition contains two or more types of chloroprene-based rubbers, the total content of monomer units other than the chloroprene-based monomer and the unsaturated nitrile monomer contained in the two or more types of chloroprene-based rubbers is preferably within the above-described numerical range with respect to the total of 100 mass% of the two or more types of chloroprene-based rubbers contained in the rubber composition.

The chloroprene-based polymer contained in the chloroprene-based rubber of the present invention may be a sulfur-modified chloroprene-based polymer, a mercaptan-modified chloroprene-based polymer, a xanthogen-modified chloroprene-based polymer, a dithiocarbonate-based chloroprene-based polymer, a trithiocarbonate-based chloroprene-based polymer, a carbamate-based chloroprene-based polymer, or the like.

The chloroprene-based rubber of one embodiment of the present invention preferably contains a rubber A containing 1 to 20 mass% of the unsaturated nitrile monomer unit. The rubber A can contain, for example, 1, 2, 4, 6, 8, 10, 12, 14, 16, 18, or 20 mass% of the unsaturated nitrile monomer unit. The content of the unsaturated nitrile monomer unit may be in the range between the two values exemplified herein.

The rubber A of one embodiment of the present invention preferably contains 60 to 99 mass% of the chloroprene monomer unit when the amount of the rubber A is taken as 100 mass%. The content of the chloroprene monomer unit in the rubber A is, for example, 60, 65, 70, 75, 80, 85, 90, 95, or 99 mass%, and may be in the range between the two values exemplified herein.

The rubber A of one embodiment of the present invention can contain 0 to 20 mass% of the monomer unit other than the chloroprene monomer and the unsaturated nitrile monomer when the amount of the rubber A is taken as 100 mass%. The content of the monomer unit other than the chloroprene monomer and the unsaturated nitrile monomer in the rubber A is, for example, 0, 2, 4, 6, 8, 10, 12, 14, 16, 18, or 20 mass%, and may be in the range between the two values exemplified herein.

The rubber A of one embodiment of the present invention can contain 1 to 20 mass% of the unsaturated nitrile monomer unit, 60 to 99 mass% of the chloroprene monomer unit, and 0 to 20 mass% of other copolymerizable monomer units other than the chloroprene monomer and the unsaturated nitrile monomer.

Further, the rubber A of one embodiment of the present invention can also be composed only of the chloroprene monomer unit and the unsaturated nitrile monomer unit.

The chloroprene-based rubber of one embodiment of the present invention can also contain a chloroprene-based rubber other than the above-described rubber A. That is, the chloroprene-based rubber of one embodiment of the present invention can contain only the rubber A, or can contain the rubber A and one or more types of rubbers different from the rubber A.

The chloroprene-based rubber of one embodiment of the present invention can contain a rubber B, which is a chloroprene-based rubber different from the rubber A. The rubber B can be a chloroprene-based rubber having a higher content of the chloroprene monomer unit than the rubber A.

The rubber B preferably contains 80 to 100 mass% of the chloroprene monomer unit when the amount of the rubber B is taken as 100 mass%. The content of the chloroprene monomer unit in the rubber B is, for example, 80, 85, 90, 95, or 100 mass%, and may be in the range between the two values exemplified herein.

The rubber B of one embodiment of the present invention can contain 0 to 20 mass% of the monomer unit other than the chloroprene monomer and the unsaturated nitrile monomer when the amount of the rubber B is taken as 100 mass%. The content of the monomer unit other than the chloroprene monomer and the unsaturated nitrile monomer in the rubber B is, for example, 0, 2, 4, 6, 8, 10, 12, 14, 16, 18, or 20 mass%, and may be in the range between the two values exemplified herein.

The content of the unsaturated nitrile monomer unit of the rubber B of one embodiment of the present invention can be lower than the content of the unsaturated nitrile monomer unit of the rubber A. The content of the unsaturated nitrile monomer unit of the rubber B of one embodiment of the present invention can also be less than 1 mass%. Further, the rubber B of one embodiment of the present invention may not contain the unsaturated nitrile monomer unit. The rubber B of one embodiment of the present invention can have 80 to 100 mass% of the chloroprene monomer unit and 0 to 20 mass% of the monomer unit other than the chloroprene monomer and the unsaturated nitrile monomer. The rubber B of one embodiment of the present invention can be composed only of the chloroprene monomer unit and the monomer unit other than the chloroprene monomer unit and the unsaturated nitrile monomer unit. Further, the rubber B of one embodiment of the present invention can be composed only of the chloroprene monomer unit. The rubber B of one embodiment of the present invention can also be a mercaptan-modified chloroprene-based rubber. The chloroprene-based rubber of one embodiment of the present invention can also contain only the rubber B, or can also contain the rubber B and one or more types of rubbers different from the rubber B.

The chloroprene-based rubber of one embodiment of the present invention can contain the rubber A, which is the chloroprene-based rubber having 1 to 20 mass% of the unsaturated nitrile monomer unit, 60 to 99 mass% of the chloroprene monomer unit, and 0 to 20 mass% of the monomer unit other than the chloroprene monomer and the unsaturated nitrile monomer, and the rubber B, which is the chloroprene-based rubber having 80 to 100 mass% the chloroprene monomer unit and 0 to 20 mass% of the monomer unit other than the chloroprene monomer and the unsaturated nitrile monomer.

The rubber composition of one embodiment of the present invention preferably contains 20 to 99 mass% of the rubber A when the amount of the chloroprene-based rubber contained in the rubber composition is taken as 100 mass%. The content of the rubber A can be, for example, 20, 25, 30, 35, 40, 45, 50, 55, 60, 65, 70, 75, 80, 85, 90, 95, or 99 mass% when the amount of the chloroprene-based rubber is taken as 100 mass%, and may be in the range between the two values exemplified herein. The chloroprene-based rubber of one embodiment of the present invention preferably contains 1 to 80 mass% of the rubber B when the amount of the chloroprene-based rubber contained in the rubber composition is taken as 100 mass%. The content of the rubber B can be, for example, 1, 5, 10, 15, 20, 25, 30, 35, 40, 45, 50, 55, 60, 65, 70, 75, or 80 mass% when the amount of the chloroprene-based rubber is taken as 100 mass%, and may be in the range between the two values exemplified herein. The chloroprene-based rubber of one embodiment of the present invention can contain 20 to 99 mass% of the rubber A and 1 to 80 mass% of the rubber B when the amount of the chloroprene-based rubber is 100 mass%. By containing the rubber B in addition to the rubber A, it is possible to further improve flex fatigue resistance.

### 1.2 Method for Producing Chloroprene-based Rubber

The method for producing the chloroprene-based rubber of the present invention is not particularly limited, and can be obtained by a production method including an emulsion polymerization step of emulsion polymerizing raw material monomers containing chloroprene monomers.

In the emulsion polymerization step of one embodiment of the present invention, a latex containing the chloroprene-based polymer containing the chloroprene monomer unit can be obtained by emulsion polymerizing monomers including chloroprene monomers, or chloroprene monomers and unsaturated nitrile monomers, using an emulsifier, a dispersant, a catalyst, a chain transfer agent and the like appropriately, and adding a polymerization terminator when the desired final conversion rate is reached.

Next, unreacted monomers can be removed from the polymerization solution obtained via the emulsion polymerization step. The method is not particularly limited, and a steam stripping method can be mentioned, for example.

Thereafter, pH is adjusted, and a chloroprene-based rubber containing the chloroprene-based polymer can be obtained by going through conventional steps such as freezing and coagulation, washing with water, and drying with hot air.

The polymerization initiator used for emulsion polymerization is not particularly limited, and known polymerization initiators commonly used for emulsion polymerization of chloroprene can be used. Examples of the polymerization initiator include organic peroxides such as potassium persulfate, ammonium persulfate, sodium persulfate, hydrogen peroxide, and t-butyl hydroperoxide.

The emulsifier used in emulsion polymerization is not particularly limited, and known emulsifiers commonly used in emulsion polymerization of chloroprene can be used. Examples of the emulsifier include alkali metal salts of saturated or unsaturated fatty acids having 6 to 22 carbon atoms, alkali metal salts of rosin acids or disproportionated rosin acids (e.g. potassium rosinate), and alkali metal salts of formalin condensate of β-naphthalenesulfonic acid (e.g. sodium salts).

The molecular weight regulator used in emulsion polymerization is not particularly limited, and known molecular weight regulators commonly used in emulsion polymerization of chloroprene can be used, such as mercaptan-based compounds, xanthogen-based compounds, dithiocarbonate-based compounds, trithiocarbonate-based compounds, and carbamate-based compounds. As the molecular weight regulator for the chloroprene-based rubber of one embodiment of the present invention, xanthogen-based compounds, dithiocarbonate-based compounds, trithiocarbonate-based compounds, and carbamate-based compounds can be suitably used.

The polymerization temperature and the final conversion rate of monomers are not particularly limited, and the polymerization temperature may be, for example, 0 to 50°C or 10 to 50°C. The polymerization may be carried out so that the final conversion rate of monomers is in the range of 40 to 95 mass%. To adjust the final conversion rate, when the desired conversion rate is reached, a polymerization terminator that stops the polymerization reaction may be added to terminate the polymerization.

The polymerization terminator is not particularly limited, and known polymerization terminators commonly used in emulsion polymerization of chloroprene can be used. Examples of the polymerization terminator include phenothiazine (thiodiphenylamine), 4-t-butylcatechol, and 2,2-methylenebis-4-methyl-6-t-butylphenol.

The chloroprene-based rubber of one embodiment of the present invention can be obtained by, for example, removing unreacted monomers using a steam stripping method, adjusting the pH of the above-described latex, and going through conventional steps such as freezing and coagulation, washing with water, and drying with hot air.

Chloroprene-based rubbers are classified into mercaptan-modified type, xanthogen-modified type, sulfur-modified type, dithiocarbonate-based type, trithiocarbonate-based type, and carbamate-based type, depending on the type of molecular weight regulator.

### 1.3 Epichlorohydrin-Based Rubber

The rubber composition of the present invention contains 5 to 95 parts by mass of an epichlorohydrin-based rubber. The epichlorohydrin-based rubber of the present invention refers to a rubber containing a polymer having epichlorohydrin as a monomer unit. The epichlorohydrin-based rubber can contain a homopolymer of epichlorohydrin, or can contain a copolymer of epichlorohydrin monomer and one or more types of other monomers.

Examples of the copolymer include an epichlorohydrin-ethylene oxide copolymer, an epichlorohydrin-propylene oxide copolymer, an epichlorohydrin-ethylene oxide-allyl glycidyl ether ternary copolymer, and an epichlorohydrin-ethylene oxide-propylene oxide-allyl glycidyl ether quaternary copolymer. The epichlorohydrin-based rubber of one embodiment of the present invention preferably contains the epichlorohydrin-ethylene oxide-allyl glycidyl ether ternary copolymer and/or the epichlorohydrin-ethylene oxide binary copolymer. The epichlorohydrin-based rubber can contain one or more types of rubbers having different types and/or contents of monomer units.

The epichlorohydrin-based rubber of one embodiment of the present invention preferably contains an ethylene oxide monomer unit. The epichlorohydrin-based rubber of one embodiment of the present invention preferably contains 5 to 90 mol% of ethylene oxide unit. The content of the ethylene oxide monomer unit in the epichlorohydrin-based rubber is, for example, 5, 10, 15, 20, 25, 30, 35, 40, 45, 50, 55, 60, 65, 70, 75, 80, 85, or 90 mol%, and may be in the range between the two values exemplified herein.

By adjusting the type and amount of the monomer unit contained in the epichlorohydrin-based rubber within the above-described range, a rubber composition which allows to obtain a vulcanized molded body having more excellent freeze resistance and flex fatigue resistance can be obtained.

For the rubber composition of the present invention, when the amount of the rubber contained in the rubber composition is taken as 100 parts by mass, the content of the chloroprene-based rubber is, for example, 5, 10, 15, 20, 25, 30, 35, 40, 45, 50, 55, 60, 65, 70, 75, 80, 85, 90, or 95 parts by mass, and may be in the range between the two values exemplified herein.

Further, for the rubber composition of the present invention, when the amount of the rubber contained in the rubber composition is taken as 100 parts by mass, the content of the epichlorohydrin-based rubber is, for example, 5, 10, 15, 20, 25, 30, 35, 40, 45, 50, 55, 60, 65, 70, 75, 80, 85, 90, or 95 parts by mass, and may be in the range between the two values exemplified herein.

The rubber composition of one embodiment of the present invention can also contain a rubber other than chloroprene-based rubber and the epichlorohydrin-based rubber. The rubber composition of one embodiment of the present invention preferably contains 70 parts by mass or more of the chloroprene-based rubber and the epichlorohydrin-based rubber in total, more preferably 80 parts by mass or more, and even more preferably 90 parts by mass or more, when the amount of the rubber contained in the rubber composition is taken as 100 parts by mass. The rubber composition of one embodiment of the present invention may not contain the rubber other than the chloroprene-based rubber and the epichlorohydrin-based rubber.

By containing a specific type of chloroprene-based rubber and a specific amount of epichlorohydrin-based rubber, the rubber composition of the present invention becomes a rubber composition which allows to obtain a vulcanizate and a vulcanized molded body having excellent processability and processing safety as well as having excellent oil resistance, freeze resistance, ozone resistance, flexural fatigue resistance, and compression set resistance.

### 1.4 Compound Having p-Phenylenediamine Structure

The rubber composition of the present invention contains a compound having a p-phenylenediamine structure.

The compound having a p-phenylenediamine structure is preferably represented by the following formula (1).

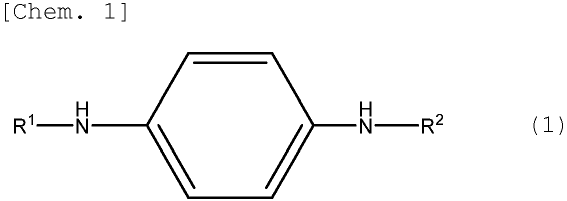

In formula (1), R¹ and R² each represent an organic group. In formula (1), at least one of R¹ and/or R² includes an aromatic ring structure. R¹ and R² may include an aromatic ring structure, and either R¹ or R² preferably includes an aromatic ring structure.

The aromatic ring structure may be an aryl group optionally having a substituent.

Examples of the aryl group include a phenyl group, a 1-naphthyl group, a 2-naphthyl group, a 2-biphenyl group, a 3-biphenyl group, and a 4-biphenyl group. The aryl group is preferably the phenyl group or the naphthyl group, and more preferably the phenyl group.

In formula (1), when either R¹ or R² includes the aromatic ring structure, the structure of the other is not particularly limited, and can be an organic group having 1 to 10 carbon atoms. The number of carbon atoms is, for example, 1, 2, 3, 4, 5, 6, 7, 8, 9, or 10, and may be in the range between the two values exemplified herein. When either R¹ or R² includes the aromatic ring structure, the other is preferably the alkyl group having 1 to 10 carbon atoms, and more preferably the alkyl group having 3 to 10 carbon atoms. The alkyl group can be a branched or linear alkyl group, and is more preferably a branched alkyl group.

The compound having a p-phenylenediamine structure preferably includes at least one selected from the group consisting of N-phenyl-N'-(1,3-dimethylbutyl)-p-phenylenediamine, N-phenyl-N'-isopropyl-p-phenylenediamine, N-1-methylheptyl-N'-phenyl-p-phenylenediamine, N-phenyl-N'-(3-methacryloyloxy-2-hydroxypropyl)-p-phenylenediamine, N,N'-di-2-naphthyl-p-phenylenediamine, N,N'-diphenyl-p-phenylenediamine, p-(p-toluenesulfonylamido)diphenylamine, and N-cyclohexyl-N'-phenyl-p-phenylenediamine, and more preferably includes at least one selected from the group consisting of N-phenyl-N'-(1,3-dimethylbutyl)-p-phenylenediamine, N-phenyl-N'-isopropyl-p-phenylenediamine, N-1-methylheptyl-N'-phenyl-p-phenylenediamine, N-phenyl-N'-(3-methacryloyloxy-2-hydroxypropyl)-p-phenylenediamine, and N-cyclohexyl-N'-phenyl-p-phenylenediamine.

The rubber composition of the present invention contains 5 to 95 parts by mass of the chloroprene-based rubber, 5 to 95 parts by mass of the epichlorohydrin-based rubber, and 0.1 to 10 parts by mass of the compound having a p-phenylenediamine structure, when the amount of the rubber contained in the rubber composition is taken as 100 parts by mass. The content of the compound having a p-phenylenediamine structure is, for example, 0.1, 0.2, 0.5, 1, 2, 3, 4, 5, 6, 7, 8, 9, or 10 parts by mass, and may be in the range between the two values exemplified herein.

By containing specific amounts of the chloroprene-based rubber, the epichlorohydrin-based rubber, and the compound having a p-phenylenediamine structure, the rubber composition of the present invention becomes the rubber composition which allows to obtain a vulcanizate and a vulcanized molded body having excellent processability and processing safety and having excellent oil resistance, freeze resistance, ozone resistance, flex fatigue resistance, and compression set resistance. The reason why the rubber composition, which allows to obtain a vulcanizate and a vulcanized molded body having excellent processability and processing safety and having excellent oil resistance, freeze resistance, ozone resistance, flex fatigue resistance, and compression set resistance, can be obtained by setting the contents of the chloroprene-based rubber, the epichlorohydrin-based rubber, and the compound having a p-phenylenediamine structure within specific numerical ranges although it has been conventionally known that a combination of the epichlorohydrin-based rubber and the compound having a p-phenylenediamine structure deteriorates ozone resistance and the like, is not necessarily clear. However, it is presumed as follows. That is, it is thought that, when a vulcanizate composed of the rubber composition containing the chloroprene-based rubber and the epichlorohydrin-based rubber is exposed to ozone, the chloroprene-based rubber in the vulcanizate is particularly prone to deteriorate and is highly likely to become the starting point of destruction such as cracks. When the compound having a p-phenylenediamine structure is added to the rubber composition containing the chloroprene-based rubber and the epichlorohydrin-based rubber, the ozone resistance of the epichlorohydrin-based rubber may deteriorate, but the ozone resistance of the chloroprene-based rubber which may be the starting point of destruction is improved. Since the latter has a significantly greater effect on the ozone resistance of the entire vulcanizate, it is presumed that the ozone resistance of the entire vulcanizate containing two types of the rubbers is dramatically improved.

### 1.5 Anti-aging Agent

The rubber composition of one embodiment of the present invention can further contain an anti-aging agent in addition to the chloroprene-based rubber, the epichlorohydrin-based rubber, and the compound having a p-phenylenediamine structure. Examples of the anti-aging agent include aromatic secondary amine-based compounds (except for compounds having a p-phenylenediamine structure), dithiocarbamate-based compounds, phenol-based compounds, waxes, phosphorus-based anti-aging agents, and sulfur-based anti-aging agents. The rubber composition of one embodiment of the present invention can contain one or more types of anti-aging agents.

The rubber composition of one embodiment of the present invention can further contain an aromatic secondary amine compound other than the compound having a p-phenylenediamine structure. Examples of the aromatic secondary amine compound include 4,4'-bis(α,α-dimethylbenzyl)diphenylamine, N-phenyl-1-naphthylamine, and alkylated diphenylamine.

The rubber composition of one embodiment of the present invention can contain 0 to 4.0 parts by mass of the aromatic secondary amine compound other than the compound having a p-phenylenediamine structure, and preferably contains 0.1 to 3 parts by mass, when the amount of the rubber contained in the rubber composition is taken as 100 parts by mass. The content of the aromatic secondary amine compound other than the compound having a p-phenylenediamine structure is, for example, 0, 0.5, 1.0, 1.5, 2.0, 2.5, 3.0, 3.5, or 4.0 parts by mass, and may be in the range between the two values exemplified herein. By containing the aromatic secondary amine compound within the above-described numerical range, the flex fatigue resistance, heat resistance, and compression set resistance of the obtained vulcanizate and vulcanized molded body can be further improved. The rubber composition of one embodiment of the present invention may not contain the aromatic secondary amine-based compound other than the compound having a p-phenylenediamine structure.

The rubber composition of one embodiment of the present invention can contain the dithiocarbamate-based compound. Examples of the dithiocarbamate-based compound include nickel dibutyldithiocarbamate.

The rubber composition of one embodiment of the present invention can contain 0 to 3.0 parts by mass, and preferably contains 0.1 to 2.0 parts by mass of the dithiocarbamate-based compound, when the rubber contained in the rubber composition is taken as 100 parts by mass. The content of the dithiocarbamate-based compound is, for example, 0, 0.5, 1.0, 1.5, 2.0, 2.5, or 3.0 parts by mass, and may be in the range between the two values exemplified herein. By containing the dithiocarbamate-based compound within the above-described numerical range, the ozone resistance and heat resistance of the obtained vulcanizate and vulcanized molded body can be further improved. Further, by setting the content of the dithiocarbamate-based compound to the above-described upper limit or less, the occurrence of blooming can be suppressed. The rubber composition of one embodiment of the present invention may not contain the dithiocarbamate-based compound.

The rubber composition of one embodiment of the present invention can contain, for example, 0.1 to 10 parts by mass of the above-described anti-aging agents in total, when the amount of the rubber contained in the rubber composition is taken as 100 parts by mass.

### 1.6 Acid Acceptor

The rubber composition of one embodiment of the present invention can contain an acid acceptor.

The acid acceptor can include at least one selected from the group consisting of a hydrotalcite compound, a magnesium-aluminum-based solid solution, zinc oxide, magnesium oxide, lead oxide, trilead tetroxide, iron trioxide, titanium dioxide, and calcium oxide, and can include at least one selected from the group consisting of a hydrotalcite compound, a magnesium-aluminum-based solid solution, zinc oxide, and magnesium oxide. The acid acceptor preferably includes zinc oxide. The acid acceptor preferably further includes at least one of a hydrotalcite compound and/or a magnesium-aluminum solid solution, and more preferably includes a hydrotalcite compound. The rubber composition of one embodiment of the present invention can contain one or more types of acid acceptors.

The hydrotalcite compound preferably has a chemical composition represented by the following formula. MₓAl_{y}(OH)_{z}CO₃·mH₂O

In the above formula, M represents a divalent metal ion consisting of at least one of Mg and/or Zn, x represents a coefficient value of 3 to 7, y represents a coefficient value of 1 to 3, z represents a coefficient value of 7 to 20, and m represents a coefficient value of 2 to 7.

The hydrotalcite compound preferably includes at least one selected from the group consisting of Mg_{4.3}Al₂(OH)_{12.6}CO₃·3.5H₂O, Mg₃ZnAl₂(OH)₁₂CO₃·3H₂O, Mg_{4.5}Al₂(OH)₁₃CO₃·3.5H₂O, Mg_{4.5}Al₂(OH)₁₃CO₃, Mg₄Al₂(OH)₁₂CO₃·3.5H₂O, Mg₆Al₂(OH)₁₆CO₃·4H₂O, Mg₅Al₂(OH)₁₄CO₃·4H₂O, and Mg₃Al₂(OH)₁₀CO₃·1.7H₂O, and more preferably includes at least one selected from the group consisting of Mg_{4.3}Al₂(OH)_{12.6}CO₃·3.5H₂O and Mg₃ZnAl₂(OH)₁₂CO₃·3H₂O.

The magnesium-aluminum-based solid solution preferably has a chemical composition represented by the following formula.

M₍₁₋ₐ₎AlₐO_{3.83a}

In the above formula, M represents a divalent metal ion consisting of at least one of Mg and/or Zn, and "a" represents a coefficient value of 0.2 to 0.5.

The magnesium-aluminum-based solid solution preferably includes Mg_{0.7}Al_{0.3}O_{1.15}.

The acid acceptor preferably has a layered structure, and the thickness of each layer is preferably 5 Å or more, and more preferably 10 Å or more. As an example, Mg_{4.3}Al₂(OH)_{12.6}CO_{3.3}·5H₂O ("DHT-4A" made by Kyowa Chemical Industry Co., Ltd.), which is a hydrotalcite compound, has a layered structure, and the thickness of each layer is 10 Å or more.

It is presumed that, when the layer thickness is above a certain level, the cross-linking of the epichlorohydrin rubber by the acid acceptor due to complex formation can be suppressed, thereby suppressing a decrease in the vulcanization rate and an increase in compression set in the obtained vulcanizate and vulcanized molded body.

The rubber composition of the present invention can contain 0.1 to 20 parts by mass of the acid acceptor when the amount of the rubber contained in the rubber composition is taken as 100 parts by mass. The content of the acid acceptor is, for example, 0.1, 0.2, 0.3, 0.5, 1, 2, 3, 4, 5, 6, 7, 8, 9, 10, 11, 12, 13, 14, 15, 16, 17, 18, 19, or 20 parts by mass, and may be in the range between the two values exemplified herein.

### 1.7 Sulfur and Vulcanizing Agent

The rubber composition of the present invention can contain a vulcanizing agent and a vulcanization accelerator, and can contain sulfur and a vulcanization accelerator.

The type of vulcanization accelerator is not particularly limited as long as it does not impair the effects of the present invention. The vulcanization accelerator is preferably a vulcanization accelerator that can be used for vulcanization of the chloroprene-based rubber and/or the epichlorohydrin-based rubber. The rubber composition of one embodiment of the present invention can contain one or more types of vulcanization accelerators.

The rubber composition of one embodiment of the present invention can contain at least one compound selected from the group consisting of sulfur, a thiourea-based compound, a thiuram-based compound, a thiazole-based compound, a sulfenamide-based compound, a dithiocarbamate-based compound, a guanidine-based compound, a xanthogenate-based compound, an imidazole-based compound, and 3-methylthiazolidine-2-thione.

Examples of the thiourea-based compound include ethylene thiourea, diethyl thiourea (N,N'-diethyl thiourea), trimethyl thiourea, diphenyl thiourea (N,N'-diphenyl thiourea), and 1,3-trimethylene-2-thiourea.

Examples of the thiuram-based compound include tetramethyl thiuram disulfide (TMTD), tetraethyl thiuram disulfide, tetrabutyl thiuram disulfide, tetrakis(2-ethylhexyl)thiuram disulfide, tetramethylthiuram monosulfide, and dipentamethylene thiuram tetrasulfide.

Examples of the thiazole-based compound include 2-mercaptobenzothiazole, di-2-benzothiazolyl disulfide, zinc salt of 2-mercaptobenzothiazole, cyclohexylamine salt of 2-mercaptobenzothiazole, 2-(4'-morpholinodithio)benzothiazole, and N-cyclohexylbenzothiazole-2-sulfenamide.

Examples of the sulfenamide-based compound include N-cyclohexylbenzothiazole-2-sulfenamide.

Examples of the dithiocarbamate-based compound include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, and tellurium diethyldithiocarbamate.

Examples of the guanidine-based compound include 1,3-diphenylguanidine, 1,3-di-o-tolylguanidine, 1-o-tolylbiguanide, and di-o-tolylguanidine salt of dicatechol borate.

Examples of the xanthate-based compound include zinc butylxanthate and zinc isopropylxanthate.

Examples of the imidazole-based compound include 2-mercaptobenzimidazole, 2-mercaptomethylbenzimidazole, and zinc salt of 2-mercaptobenzimidazole.

The rubber composition of one embodiment of the present invention can contain at least one of sulfur, a thiourea-based compound, and/or 3-methylthiazolidine-2-thione, and preferably contains at least one compound selected from the group consisting of sulfur, trimethylthiourea, ethylenethiourea, diphenylthiourea, diethylthiourea, dibutylthiourea, 1,3-trimethylene-2-thiourea, and 3-methylthiazolidine-2-thione. The rubber composition of one embodiment of the present invention can contain 10.0 parts by mass or less of sulfur, the thiourea-based compound, and 3-methylthiazolidine-2-thione in total when the amount of the rubber contained in the rubber composition is taken as 100 parts by mass. The total content of sulfur, the thiourea-based compound, and 3-methylthiazolidine-2-thione is, for example, 0, 0.1, 0.3, 0.5, 1.0, 1.5, 2.0, 2.5, 3.0, 3.5, 4.0, 4.5, 5.0, 5.5, 6.0, 6.5, 7.0, 8.0, 9.0, or 10.0 parts by mass, and may be in the range between the two values exemplified herein.

The rubber composition of one embodiment of the present invention can contain an imidazole-based compound, and preferably contains at least one compound selected from the group consisting of 2-mercaptobenzimidazole, 2-mercaptomethylbenzimidazole, and zinc salt of 2-mercaptobenzimidazole. The rubber composition of one embodiment of the present invention can further improve the flex fatigue resistance of the obtained vulcanizate and vulcanized molded body by containing the imidazole-based compound. The rubber composition of one embodiment of the present invention can contain 0 to 2.0 parts by mass of the imidazole-based compound in total, and preferably contains 0.1 to 1.5 parts by mass, when the amount of the rubber contained in the rubber composition is taken as 100 parts by mass. The content of the imidazole-based compound is, for example, 0, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2.0, and may be in the range between the two values exemplified herein. By setting the content of the imidazole-based compound to the above-described lower limit or more, the flex fatigue resistance of the vulcanizate and vulcanized molded body can be further improved. Further, by setting the content of the imidazole-based compound to the above-described upper limit or less, it is possible to prevent a decrease in the processing safety of the rubber composition due to ionic crosslinking and a decrease in the compression set resistance of the vulcanizate and vulcanized molded body.

The rubber composition of one embodiment of the present invention can contain 10.0 parts by mass or less of sulfur and vulcanization accelerator in total when the amount of the rubber contained in the rubber composition is taken as 100 parts by mass. The content of sulfur and vulcanization accelerator is, for example, 0, 0.1, 0.3, 0.5, 1.0, 1.5, 2.0, 2.5, 3.0, 3.5, 4.0, 4.5, 5.0, 5.5, 6.0, 6.5, 7.0, 8.0, 9.0, or 10.0 parts by mass, and may be in the range between the two values exemplified herein.

### 1.8 Filler and Reinforcing Material

The rubber composition of one embodiment of the present invention can contain a filler and/or a reinforcing material.

Examples of the filler and reinforcing material include furnace carbon blacks such as SAF, ISAF, HAF, EPC, XCF, FEF, GPF, HMF, and SRF, modified carbon blacks such as hydrophilic carbon black, channel black, lamp black, thermal carbons such as FT and MT, acetylene black, ketjen black, silica, clay, talc, and calcium carbonate. The rubber composition of one embodiment of the present invention can contain one or more types of fillers and/or reinforcing materials.

The rubber composition of one embodiment of the present invention can contain 20 to 90 parts by mass of the filler and reinforcing material in total, and preferably contains 35 to 80 parts by mass, when the amount of the rubber contained in the rubber composition is taken as 100 parts by mass. The content of the filler and reinforcing material is, for example, 20, 25, 30, 35, 40, 45, 50, 55, 60, 65, 70, 75, 80, 85, or 90 parts by mass, and may be in the range between the two values exemplified herein. The rubber composition of one embodiment of the present invention can improve the hardnesses of the vulcanizate and vulcanized molded body by setting the contents of the filler and reinforcing material in the above-described numerical ranges.

### 1.9 Plasticizer and Softener

The rubber composition of one embodiment of the present invention can contain a plasticizer and/or a softener. The plasticizer and softener are added to adjust the processability of the unvulcanized rubber composition and the flexibility of the vulcanizate and vulcanized molded body after vulcanization. The plasticizer and softener are not particularly limited as long as they are compatible with rubber. Examples of the plasticizer and softener include vegetable oils such as rapeseed oil, linseed oil, castor oil, and coconut oil, phthalate-based plasticizers, ester-based plasticizers such as DUP (diundecyl phthalate), DOP (dioctyl phthalate), DINP (diisononyl phthalate), DOTP (dioctyl terephthalate), DOS (dioctyl sebacate), DBS (dibutyl sebacate), DOA (dioctyl adipate), DINCH (diisononyl 1,2-cyclohexanedicarboxylate), TOP (trioctyl phosphate), TBP (tributyl phosphate), ether ester-based plasticizers, thioether-based plasticizers, petroleum-based plasticizers such as aromatic-based oils, naphthenic-based oils, lubricating oils, process oils, paraffins, liquid paraffins, Vaselines, and petroleum asphalts. The rubber composition of one embodiment of the present invention can contain one or more types of plasticizers and/or softeners.

The rubber composition of one embodiment of the present invention can contain 50 parts by mass or less of the plasticizer and the softener in total when the amount of the rubber contained in the rubber composition is taken as 100 parts by mass. The total content of the plasticizer and the softener is, for example, 0, 1, 2, 3, 4, 5, 10, 15, 20, 25, 30, 35, 40, 45, or 50 parts by mass, and may be in the range between the two o values exemplified herein. The rubber composition of one embodiment of the present invention may not contain the plasticizer and/or the softener.

### 1.10 Lubricant and Processing Aid

The rubber composition of the present invention can further contain a lubricant and/or a processing aid. The lubricant and processing aid are mainly added to improve processability, such as to make the rubber composition easier to peel off from rolls, molding dies, extruder screws, or the like. Examples of the lubricant and processing aid include fatty acids such as stearic acid, paraffin-based processing aids such as polyethylene, fatty acid amides, Vaselines, and factices. The rubber composition of one embodiment of the present invention can contain one or more types of lubricants and/or processing aids.

The rubber composition of the present invention can contain 15 parts by mass or less of the lubricant and processing aid in total when the amount of the rubber contained in the rubber composition is taken as 100 parts by mass, and can also contain 10 parts by mass or less. The total content of the lubricant and processing aid is, for example, 0, 1, 2, 3, 4, 5, 6, 7, 8, 9, 10, 11, 12, 13, 14, or 15 parts by mass, and may be in the range between the two values exemplified herein. The rubber composition of the present invention may not contain the lubricant and/or the processing aid.

### 1.11 Others

In addition to the above-described components, the rubber composition of the present invention may further contain components such as silane coupling agents, co-crosslinking agents, stabilizers, flame retardants, and vulcanization retarders, to the extent that the effects of the present invention are not hindered. Examples of the vulcanization retarder include tetrabenzyl thiuram disulfide. The rubber composition of one embodiment of the present invention can contain 0 to 5.0 parts by mass of the vulcanization retarder when the amount of the rubber contained in the rubber composition is taken as 100 parts by mass.

### 2. Method for Producing Rubber Composition

The rubber composition of one embodiment of the present invention is obtained by kneading the chloroprene-based rubber, the epichlorohydrin-based rubber, the compound having p-phenylenediamine structure, and other necessary components at a temperature not higher than the vulcanization temperature. Examples of the device for kneading the raw material components include kneading devices such as a conventionally known mixer, a Banbury mixer, a kneader mixer, and an open roll.

### 3. Characteristics of Rubber Composition

The rubber composition of one embodiment of the present invention preferably has the following characteristics.

### (Processing Safety)

The scorch time of the rubber composition of one embodiment of the present invention preferably is preferably 4 minutes or more, more preferably 7 minutes or more, and even more preferably 10 minutes or more, when a Mooney scorch test is conducted in accordance with JIS K 6300-1 using an L-type rotor at a test temperature of 125°C, and the time when the measured Mooney viscosity increases by 5M is defined as the scorch time. The scorch time is, for example, 4, 5, 6, 7, 8, 9, 10, 11, 12, 13, 14, 15, 16, 17, 18, 19, or 20 minutes, and may be in the range between the two values exemplified herein.

### (Processability)

The vulcanization time (T90) of the rubber composition of one embodiment of the present invention at 170°C, which is measured in accordance with JIS K 6300-2, is preferably less than 20 minutes, more preferably less than 15 minutes, and even more preferably less than 10 minutes. The vulcanization time (T90) is, for example, 5, 6, 7, 8, 9, 10, 11, 12, 13, 14, 15, 16, 17, 18, 19 minutes, or less than 20 minutes, and may be in the range between the two values exemplified herein.

For the rubber composition of one embodiment of the present invention, the vulcanizate of the rubber composition preferably has the following characteristics.

### (Oil Resistance)

For the rubber composition of one embodiment of the present invention, the volume change rate ΔV calculated in accordance with JIS K 6258 before and after immersion of the vulcanizate of the rubber composition in a test oil (high lubricating oil for automobiles, ASTM No. 3, IRM 903 oil) at 130°C for 72 hours is preferably less than 40%, more preferably less than 30%, and even more preferably less than 20%. The volume change rate ΔV is, for example, 0, 5, 10, 15, 20, 25, 30, 35%, or less than 40%, and may be in the range between the two values exemplified herein.

### (Freeze Resistance)

For the rubber composition of one embodiment of the present invention, the T10 of the vulcanizate of the rubber composition, which is determined by a Gehman torsion test in accordance with JIS K 6261, is preferably less than -26°C, more preferably less than -30°C, and even more preferably less than -34°C. The T10 is, for example, -50°C, -45°C, - 40°C, -35°C, -30°C, -27°C, or less than -26°C, and may be in the range between the two values exemplified herein.

### (Flexural Fatigue Resistance)

For the rubber composition of one embodiment of the present invention, when the vulcanizate of the rubber composition is subjected to a De Mattia flex fatigue test in accordance with JIS K6260, the number of bending tests at the time a crack occurs, which is measured under the conditions of a stroke of 58 mm and a speed of 300 ± 10 rpm, is preferably 300,000 times or more, more preferably 650,000 times or more, and even more preferably 1,000,000 times or more. The number of bending tests at the time a crack occurs is, for example, 300,000, 350,000, 400,000, 450,000, 500,000, 550,000, 600,000, 650,000, 700,000, 750,000, 800,000, 850,000, 900,000, 950,000, 1,000,000, 2,000,000, 3,000,000, 4,000,000, 5,000,000, 6,000,000, 7,000,000, or 8,000,000 times, and may be in the range between the two values exemplified herein.

### (Ozone Resistance)

For the rubber composition of one embodiment of the present invention, when the vulcanizate of the rubber composition is subjected to a dynamic ozone degradation test in accordance with JIS K 6259-1 under the conditions of a test temperature of 40°C, an ozone concentration of 50 pphm, and an elongation rate of 30%, the time until a crack occurs on the surface or side thereof is preferably 100 hours or more, more preferably 300 hours or more, and even more preferably 500 hours or more. The time until a crack occurs is, for example, 100, 200, 300, 400, 500, 600, 700, or 800 hours, and may be in the range between the two values exemplified herein.

### (Compression Set Resistance)

For the cylindrical vulcanized molded body, which was obtained by press-vulcanizing the rubber composition of one embodiment of the present invention at 170°C for 30 minutes and has a diameter of 29 mm and a height of 12.5 mm, the compression set measured in accordance with JIS K 6262:2013 under test conditions of 130°C and 72 hours is preferably less than 55, more preferably less than 50, and even more preferably less than 45.

Note that, the vulcanizate of the rubber composition used to evaluate oil resistance, freeze resistance, and ozone resistance can be, for example, a vulcanizate or vulcanized molded body obtained by press vulcanization at 170°C for 20 minutes in accordance with JIS K6299, the vulcanizate used to evaluate compression set resistance can be a cylindrical vulcanized molded body having a diameter of 29 mm and a height of 12.5 mm obtained by press vulcanization at 170°C for 30 minutes, and the vulcanizate used to evaluate flex fatigue resistance can be a vulcanized molded body for the De Mattia flex fatigue test obtained by press vulcanization at 170°C for 20 minutes. Specifically, each physical property can be evaluated by the method described in Examples. Further, the processing safety and processability of the rubber composition, as well as the oil resistance, freeze resistance, ozone resistance, flex fatigue resistance, and compression set resistance of the vulcanizate can be controlled by adjusting the content of each monomer unit in each rubber contained in the rubber composition, the amount of each rubber, and the type and amount of the component other than the rubber contained in the rubber composition. The rubber composition of the present invention is excellent in processing safety and processability, and allows to obtain a vulcanizate and a vulcanized molded body having excellent oil resistance, freeze resistance, ozone resistance, flex fatigue resistance, and compression set resistance.

### 4. Unvulcanized Molded Body, Vulcanizate, and Vulcanized Molded Body

The unvulcanized molded body of the present embodiment uses the rubber composition of the present embodiment, and is a molded body (molded product) of the rubber composition of the present embodiment (unvulcanized state). The method for producing the unvulcanized molded body of the present embodiment includes a step of molding the rubber composition of the present embodiment (unvulcanized state). The unvulcanized molded body of the present embodiment is made of the rubber composition of the present embodiment (unvulcanized state).

The vulcanizate of the present embodiment is a vulcanizate of the rubber composition of the present embodiment. The method for producing the vulcanizate of the present embodiment includes a step of vulcanizing the rubber composition of the present embodiment.

The vulcanized molded body of the present embodiment is a vulcanized molded body of the rubber composition of the present embodiment. The vulcanized molded body of the present embodiment uses the vulcanizate of the present embodiment, and is a molded body (molded product) of the vulcanizate of the present embodiment. The vulcanized molded body of the present embodiment is made of the vulcanizate of the present embodiment.

The vulcanized molded body of the present embodiment can be obtained by molding a vulcanizate obtained by vulcanizing the rubber composition of the present embodiment (unvulcanized state), and can also be obtained by vulcanizing a molded body obtained by molding the rubber composition of the present embodiment (unvulcanized state). The vulcanized molded body of the present embodiment can be obtained by vulcanizing the rubber composition of the present embodiment after or during molding. The method for producing the vulcanized molded body of the present embodiment includes a step of molding the vulcanizate of the present embodiment, or a step of vulcanizing the unvulcanized molded body of the present embodiment.

The vulcanizate and vulcanized molded body of one embodiment of the present invention preferably have the above-described oil resistance, freeze resistance, ozone resistance, flex fatigue resistance, and compression set resistance.

The unvulcanized molded body, vulcanizate, and vulcanized molded body of the present embodiment can be used as rubber parts in various industrial fields such as buildings, structures, ships, railways, coal mines, and automobiles. The vulcanizate of the rubber composition of one embodiment of the present invention has excellent oil resistance, freeze resistance, ozone resistance, flex fatigue resistance, and compression set resistance, and thus can be used as various members that require these characteristics. The rubber composition of one embodiment of the present invention can be used as rubber parts in various industrial fields such as buildings, structures, ships, railways, coal mines, and automobiles, and can be used as rubber parts such as automotive rubber members (e.g., automotive sealing materials), hose materials, rubber molded articles, gaskets, rubber rolls, industrial cables, industrial conveyor belts, and sponges. In particular, it can be used as members for accumulators, diaphragms, and hoses.

### (Automobile Rubber Members)

The automobile rubber members include gaskets, oil seals, and packings, which are members that prevent the leakage of liquid and gas and the intrusion of debris and foreign substances such as rainwater and dust into machines and equipment. Specifically, there are gaskets used for fixing applications, and oil seals and packings used for moving parts and movable parts. In gaskets in which the sealing part is fixed by a bolt or the like, various materials are used depending on the purpose for soft gaskets such as O-rings and rubber sheets. Further, packings are also used in rotating parts such as shafts of pump and motor and movable parts of valves, reciprocating moving parts such as pistons, connecting parts of couplers, water stopping parts of water faucets and the like. The vulcanizate of the rubber composition of one embodiment of the present invention is excellent in oil resistance, freeze resistance, ozone resistance, flexural fatigue resistance, and compression set resistance, and therefore it is possible to produce, for example, seals that are used by taking advantage of these characteristics.

### (Hose Material)

The hose materials are bendable tubes. Specific examples include high and low pressure hoses for water supply, oil supply, air supply, steam, and hydraulic pressure. The vulcanizate of the rubber composition of one embodiment of the present invention is excellent in oil resistance, freeze resistance, ozone resistance, flexural fatigue resistance, and compression set resistance, and therefore it is possible to produce, for example, hose materials that are used by taking advantage of these characteristics.

### (Rubber Molded Article)

Examples of the rubber molded articles include vibration-proofing rubbers, damping materials, and boots. The vibration-proofing rubbers and damping materials are rubbers that prevent the transmission of vibrations. Specifically, there are torsional dampers, engine mounts, muffler hangers, and the like, for absorbing vibrations during engine operation of automobiles and various vehicles to prevent noise. The rubber composition of the present invention can improve the durability of vibration-proofing rubbers and damping materials. This makes it possible to produce the vibration-proofing rubbers and damping materials that can be used in applications where high loads are applied, which has been difficult with conventional rubber compositions.

Further, the boot is a bellows-shaped member whose outer diameter gradually increases from one end to the other end. Specific examples thereof include constant velocity joint cover boots, ball joint cover boots (dust cover boots), and rack and pinion gear boots, for protecting drive parts such as automobile drive systems. The vulcanizate of the rubber composition of one embodiment of the present invention is excellent in oil resistance, freeze resistance, ozone resistance, flex fatigue resistance, and compression set resistance, and therefore it is possible to produce boots that are used by taking advantage of these characteristics, for example.

### (Gaskets, etc.)

Gaskets, oil seals, and packings are parts that prevent the leakage of liquid or gas and the intrusion of debris and foreign substances such as rainwater and dust into machines and equipment. Specific examples thereof include gaskets used for fixing applications, and oil seals and packings used for moving parts and movable parts. In gaskets in which the sealing part is fixed by a bolt or the like, various materials are used depending on the purpose for soft gaskets such as O-rings and rubber sheets. Further, packings are also used in rotating parts such as pump and motor shafts and movable parts of valves, reciprocating moving parts such as pistons, connecting parts of couplers, water stopping parts of water faucets, and the like. The vulcanizate of the rubber composition of one embodiment of the present invention is excellent in oil resistance, freeze resistance, ozone resistance, flexural fatigue resistance, and compression set resistance, and therefore it is possible to produce, for example, seals that are used by taking advantage of these characteristics.

### (Rubber Roll)

Rubber rolls are produced by adhesively covering a metal core such as an iron core with rubber, and are generally produced by winding a rubber sheet around a metal iron core in a spiral shape. Rubber materials such as NBR, EPDM, and CR are used for rubber rolls depending on the required characteristics for various applications such as papermaking, various metal productions, film productions, printing, general industrial use, agricultural equipment such as rice hullers, and food processing. Since the CR has good mechanical strength that may withstand friction of the object to be conveyed, it is used in a wide range of rubber roll applications. On the other hand, rubber rolls used in an environment where oil adheres, such as in the production of industrial materials and products for steel and paper productions, have insufficient oil resistance, and improvements are thus required. In addition, when plating products with gold, silver, nickel, chromium, zinc, or the like, they may be exposed to an acidic environment of pH 4 or less or an alkaline environment of pH 11 or more, and therefore the resistance against these is required. Furthermore, rubber rolls which convey heavy loads have the problem of deformation under load, and improvements are thus required. The vulcanizate of the rubber composition of one embodiment of the present invention is excellent in oil resistance, freeze resistance, ozone resistance, flexural fatigue resistance, and compression set resistance, and it is therefore possible to produce rubber rolls that are used by taking advantage of these characteristics, for example.

### (Industrial Cable)

Industrial cables are wire materials for transmitting electrical or optical signals. They are those produced by covering good conductors such as copper and copper alloy, optical fibers, or the like, with an insulating coating layer, and a wide variety of industrial cables are produced depending on the structure and installation location. The vulcanizate of the rubber composition of one embodiment of the present invention is excellent in oil resistance, freeze resistance, ozone resistance, flexural fatigue resistance, and compression set resistance, and therefore it is possible to produce industrial cables that are used by taking advantage of these characteristics, for example.

### (Industrial Conveyor Belt)

There are industrial conveyor belts made of rubber, resin, and metal, and they are selected for a wide variety of uses. Among these, conveyor belts made of rubber are inexpensive and widely used. However, when they were used in an environment where there was a lot of friction and collision with the conveyed goods, damage and the like due to deterioration have occurred. The vulcanizate made of the rubber composition of one embodiment of the present invention is excellent in oil resistance, freeze resistance, ozone resistance, flex fatigue resistance, and compression set resistance, and therefore it is possible to produce industrial conveyor belts that are used by taking advantage of these characteristics, for example.

### (Sponge)

A sponge is a porous material with numerous fine pores inside. Specifically, it is used in vibration-proofing members, sponge seal parts, wet suits, shoes, and the like. The rubber composition of the present invention can increase the tensile strength of the sponge. In addition, since the chloroprene-based rubber is used, it is also possible to improve the flame retardancy of the sponge. The vulcanizate of the rubber composition of one embodiment of the present invention is excellent in oil resistance, freeze resistance, ozone resistance, flex fatigue resistance, and compression set resistance, and therefore it is possible to produce sponges that are used by taking advantage of these characteristics, and sponges that have excellent flame retardancy. Further, the hardness of the sponge obtained can be adjusted as appropriate by adjusting the foaming agent content and the like.

### (Accumulator)

An accumulator is a pressure accumulation container that utilizes the compressibility of nitrogen gas and is used for capacity compensation and pulsation absorption in fluid circuits. As the mechanism of an accumulator, compressibility of nitrogen gas can be utilized to store the pressure of a fluid such as oil and water, and to instantly supply a large amount of pressure fluid or absorb pulsation or shock pressure. Accumulators come in bladder, diaphragm, and piston shapes, depending on the isolation structure between gas and fluid. Rubber materials such as NBR and CR are used for bladders and diaphragms depending on the type of fluid used.

The rubber composition of the present invention allows to obtain a vulcanized rubber having excellent oil resistance, freeze resistance, and flex fatigue resistance, and therefore it is possible to produce accumulators with better durability than conventional rubber compositions.

### (Diaphragm)

A diaphragm is a membrane that separates fluid, especially a diaphragm that has a deep constriction and is used by folding back its cylindrical portion is called a bellofram. Belloframs and diaphragms are not used alone, but are assembled into equipment to perform their functions, and include those made only of rubber and those obtained by coating rubber on polyester cloth or the like. Specifically, diaphragms are used as pressure reducing valves, pumps, and cylinders. The rubber composition of the present invention can improve the oil resistance and flex fatigue resistance of these diaphragms. As a result, it is possible to produce diaphragms used for non-polar fluids such as engine oil and gear oil, which has been difficult with conventional rubber compositions.

Examples of the method for molding the rubber composition (unvulcanized state) and vulcanizate of the present embodiment include press molding, extrusion molding, and calendar molding. The temperature at which the rubber composition is vulcanized may be appropriately set depending on the composition of the rubber composition, and may be 140 to 220°C, or 160 to 190°C. The vulcanization time for vulcanizing the rubber composition may be appropriately set depending on the composition of the rubber composition, the shape of the unvulcanized molded body, and the like, and may be 2 to 60 minutes.

### Examples

Hereinafter, the present invention will be explained in more detail based on Examples, but the present invention is not limited thereto.

### <Method for Producing Chloroprene-based Rubber A-2>

In a polymerization vessel with an internal volume of 3 L equipped with a heating and cooling jacket and a stirrer, 24 parts by mass of chloroprene (monomer), 24 parts by mass of acrylonitrile (monomer), 0.5 parts by mass of diethylxanthogen disulfide, 200 parts by mass of pure water, 5.00 parts by mass of potassium rosinate (made by Harima Chemicals Group, Inc.), 0.40 parts by mass of sodium hydroxide, and 2.0 parts by mass of sodium salt of β-naphthalenesulfonic acid formalin condensate (made by Kao Corporation) were added. Next, after adding 0.1 parts by mass of potassium persulfate as a polymerization initiator, emulsion polymerization was carried out at a polymerization temperature of 40°C under a nitrogen flow. The dividing addition of the above-described chloroprene was continually performed from 20 seconds after the start of polymerization, while the flow rate of dividing addition was adjusted using a solenoid valve based on the change in heat quantity of the refrigerant during 10 seconds after the start of polymerization, and the flow rate was readjusted every 10 seconds thenceforth. When the polymerization rate with respect to the total amount of chloroprene and acrylonitrile reached 50%, 0.02 parts by mass of phenothiazine was added as a polymerization terminator to terminate the polymerization. Thereafter, unreacted monomers in the reaction solution were removed under reduced pressure to obtain a chloroprene-based rubber A-2 containing a chloroprene-acrylonitrile copolymer.

The above-described polymerization rate [%] of the chloroprene-based latex was calculated from the dry mass after the chloroprene-based latex was air-dried. Specifically, it was calculated using the following formula (A). In the formula, "solid content concentration" is the concentration of solid content [mass%] after heating 2 g of sampled chloroprene-based latex at 130°C and removing volatile components such as solvent (water), volatile chemicals, and raw materials. The "total amount charged" is the total amount [g] of raw materials, reagents, and solvent (water) charged into the polymerization vessel from the start of polymerization to a certain time. The "evaporation residue" is the mass [g] of chemicals that remain as a solid content together with the polymer without volatilizing under the condition of 130°C, among the chemicals and raw materials charged up to a certain time from the start of polymerization. The "amount of monomer charged" is the total amount [g] of the monomer initially charged into the polymerization vessel and the amount of monomer dividedly added up to a certain time from the start of polymerization. Note that the "monomer" here refers to the total amount of chloroprene and acrylonitrile. Polymerization rate = {[(total amount charged × solid content concentration/100) - evaporation residue]/amount of monomer charged} × 100

The content of the acrylonitrile monomer unit contained in the chloroprene-based rubber A-2 was calculated from the content of nitrogen atoms in the chloroprene-acrylonitrile copolymer rubber. Specifically, the content of nitrogen atoms in 100 mg of chloroprene-based rubber A-2 was measured using an elemental analyzer (Sumigraph 220F, made by Sumika Chemical Analysis Service, Ltd.), and the content of the acrylonitrile monomer unit was calculated.

The above-described elemental analysis was performed as follows. The electric furnace temperature was set to 900°C for the reaction furnace and 600°C for the reduction furnace, the column temperature was set to 70°C, and the detector temperature was set to 100°C, oxygen was flowed at 0.2 mL/min as a combustion gas and helium was flowed at 80 mL/min as a carrier gas. A calibration curve was created using aspartic acid (10.52%), which has a known nitrogen content, as a reference material.

The content of the acrylonitrile monomer unit in the chloroprene-based rubber A-2 obtained by the above production method was 10.0 mass%.

### <Method for Producing Chloroprene-based Rubber A-1, A-3 to A-5>

By changing the amount of acrylonitrile monomer added in the polymerization step, a chloroprene-based rubber A-1 in which the content of acrylonitrile monomer unit contained in the chloroprene-based rubber was 5.0 mass%, a chloroprene-based rubber A-3 in which the content of the acrylonitrile monomer unit was 15.0 mass%, a chloroprene-based rubber A-4 in which the content of the acrylonitrile monomer unit was 20.0 mass%, and a chloroprene-based rubber A-5 in which the content of the acrylonitrile monomer unit was 25.0 mass% were obtained.

### <Preparation of Rubber Composition>

The rubber compositions of Examples and Comparative Examples were obtained by mixing the components as shown in Tables 1 to 3 and kneading them with an 8-inch open roll.

The components used to obtain the rubber composition are as follows.

### <Chloroprene-based Rubber>

Rubber A: chloroprene-based rubbers A-1 to A-5 described above
Rubber B: mercaptan-modified chloroprene-based rubber, "S-40V" made by Denka Company Limited

### <Epichlorohydrin-based Rubber>

Epichlorohydrin-ethylene oxide-allyl glycidyl ether ternary copolymer (ethylene oxide 56 mol%), "EPICHLOMER CG102" made by Osaka Soda Co., Ltd.

Epichlorohydrin-ethylene oxide-allyl glycidyl ether ternary copolymer (ethylene oxide 35 mol%), "HydrinT3102" made by Zeon Corporation

Epichlorohydrin-ethylene oxide binary copolymer (ethylene oxide 61 mol%), "EPICHLOMER D" made by Osaka Soda Co., Ltd.

### <Anti-aging Agent>

Compound having a p-phenylenediamine structure: N-phenyl-N'-(1,3-dimethylbutyl)-p-phenylenediamine, "Nocrac 6C" made by Ouchi Shinko Chemical Industry Co., Ltd.

Compound having a p-phenylenediamine structure: N-phenyl-N'-isopropyl-p-phenylenediamine, "Nocrac 810-NA" made by Ouchi Shinko Chemical Industry Co., Ltd.

Compound having a p-phenylenediamine structure: N-phenyl-N'-(3-methacryloyloxy-2-hydroxypropyl)-p-phenylenediamine, "Nocrac G-1" made by Ouchi Shinko Chemical Industry Co., Ltd.

Aromatic secondary amine compound (except for compounds having a p-phenylenediamine structure): 4,4'-bis(α,α-dimethylbenzyl)diphenylamine, "Nocrac CD" made by Ouchi Shinko Chemical Industry Co., Ltd.

Dithiocarbamate-based compound: nickel dibutyldithiocarbamate, "Nocrac NBC" made by Ouchi Shinko Chemical Industry Co., Ltd.

### <Acid Acceptor>

Hydrotalcite compound: chemical composition Mg_{4.3}Al₂(OH) _{12.6}CO₃·3.5H₂O, "DHT-4A" made by Kyowa Chemical Industry Co., Ltd.

Magnesium-aluminum-based solid solution: chemical composition Mg_{0.7}Al_{0.3}O_{1.15}, "KW-2100" made by Kyowa Chemical Industry Co., Ltd.

Magnesium oxide: "Kyowa Mag 150" made by Kyowa Chemical Industry Co., Ltd.

Zinc oxide, "Zinc oxide type 2" made by Sakai Chemical Industry Co., Ltd.

### <Vulcanization Accelerator>

Ethylenethiourea, "Axel 22S" made by Kawaguchi Kogyo K.K.

3-Methyl-thiazolidine-2-thione, "Rhenogran MTT-80" made by Lanxess

2-Mercaptobenzimidazole, "Nocrac MB" made by Ouchi Shinko Chemical Industrial Co., Ltd.

Tetrabenzyl thiuram disulfide, "Nocceler TBZTD" made by Ouchi Shinko Chemical Industry Co., Ltd.

### <Filler>

Carbon Black (FEF), "Asahi #60UG" made by Asahi Carbon Co., Ltd.

### <Plasticizer>

Polyetherester-based, "RS-700" made by ADEKA Corporation

### <Lubricant and Processing Aid>

Stearic acid, "Stearic acid 50S" made by New Japan Chemical Co., Ltd.

Sorbitan monostearate, Span 60, "Sorbitan Monostearate" made by FUJIFILM Wako Pure Chemical Corporation

### <Evaluation of Rubber Composition>

### (Processing Safety)

The obtained rubber composition was subjected to a Mooney scorch test in accordance with JIS K 6300-1 using an L-type rotor at a test temperature of 125°C. The time when the measured Mooney viscosity increased by 5M was defined as the scorch time. The obtained scorch time was evaluated based on the following criteria.
A: 10 minutes or more
B: 7 minutes or more and less than 10 minutes
C: 4 minutes or more and less than 7 minutes
D: less than 4 minutes

### (Processability)

The vulcanization time (T90) of the obtained rubber composition at 170°C was measured in accordance with JIS K 6300-2 and evaluated based on the following criteria.
A: less than 10 minutes
B: 10 minutes or more and less than 15 minutes
C: 15 minutes or more and less than 20 minutes
D: 20 minutes or more

### <Preparation of Vulcanized Molded Body>

The obtained rubber composition was press-vulcanized at 170°C for 20 minutes in accordance with JIS K6250 to produce a sheet-shaped vulcanized molded body having a thickness of 2 mm. Further, the obtained rubber composition was press-vulcanized at 170°C for 30 minutes to produce a cylindrical vulcanized molded body having a diameter of 29 mm and a height of 12.5 mm for measuring compression set. Further, the obtained rubber composition was press-vulcanized at 170°C for 20 minutes to produce a vulcanized molded body for a DeMattia flex fatigue test.

### <Evaluation of Vulcanized Molded Body>

The obtained vulcanized molded bodies were evaluated by the following methods. The results are shown in Tables 1 to 3.

### (Oil Resistance)

A test piece having a length of 25 mm and a width of 20 mm was obtained by punching out the above-described sheet-shaped vulcanized molded body. The obtained test piece was immersed in test oil (high lubricating oil for automobiles, ASTM No. 3, IRM 903 oil) at 130°C for 72 hours. The volume change rate ΔV was calculated in accordance with JIS K 6258. The obtained volume change rate ΔV was evaluated based on the following criteria.
A: less than 20%
B: 20% or more and less than 30%
C: 30% or more and less than 40%
D: 40% or more

### (Freeze Resistance)

A Gehman torsion test was conducted in accordance with JIS K 6261 to determine T10. The temperature (T10) at which the 180° torsional modulus becomes 10 times the 180° torsional modulus at room temperature was determined for the above-described sheet-shaped vulcanized molded body. The obtained T10 was evaluated based on the following criteria.
A: lower than -34°C
B: -34°C or higher and lower than -30°C
C: -30°C or higher and lower than -26°C
D: -26°C or higher

### (Flex Fatigue Resistance)

The De Mattia flex fatigue test was conducted in accordance with JIS K6260. Under the conditions of a stroke of 58 mm and a speed of 300 ± 10 rpm, the number of bending tests (unit: 10,000 times) at the time a crack occurs was measured to evaluate the fatigue resistance. Measurements were performed up to 10,000,000 times. The number of bending tests at the time a crack occurs was evaluated based on the following evaluation criteria.
S: 5,000,000 times or more
A: 1,000,000 times or more and less than 5,000,000 times
B: 650,000 times or more and less than 1,000,000 times
C: 300,000 times or more and less than 650,000 times
D: less than 300,000 times

### (Compression Set Resistance)

A cylindrical vulcanized molded body having a diameter of 29 mm and a height of 12.5 mm was obtained by press vulcanization at 170°C for 30 minutes, and the compression set was measured using a test conditions of 130°C and 72 hours in accordance with JIS K 6262:2013. The compression set was evaluated based on the following criteria.
A: less than 45
B: 45 or more and less than 50
C: 50 or more and less than 55
D: 55 or more

### (Ozone Resistance)

A test piece having a length of 25 mm and a width of 20 mm was obtained by punching out the above-described sheet-shaped vulcanized molded body, and the dynamic ozone degradation test was conducted in accordance with JIS K 6259-1. When being continuously exposed to ozone under the conditions of a test temperature of 40°C, an ozone concentration of 50 pphm, and an elongation rate of 30%, the time until a crack occurs on the surface or side thereof was measured and evaluated based on the following criteria.
A: 500 hours or more
B: 300 hours or more and less than 500 hours
C: 100 hours or more and less than 300 hours
D: less than 100 hours

**[Table 1]**

| Table 1 | | | | Unit | Example | | | | | | | | | | | | |
|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 |
| | Chloroprene-based Rubber | Rubber A | Chloroprene-based Rubber A-1 (Acrylonitrile Monomer Unit Content 5%) | parts by mass | | | | | | | | | | | | | |
| | | | Chloroprene-based Rubber A-2 (Acrylonitrile Monomer Unit Content 10%) | parts by mass | 90 | 80 | 60 | 40 | 20 | 10 | 30 | 30 | 30 | 30 | 30 | 30 | 30 |
| | | | Chloroprene-based Rubber A-3 (Acrylonitrile Monomer Unit Content 15%) | parts by mass | | | | | | | | | | | | | |
| | | | Chloroprene-based Rubber A-4 (Acrylonitrile Monomer Unit Content 20%) | parts by mass | | | | | | | | | | | | | |
| | | Rubber B | Mercaptan-modified Chloroprene Rubber | parts by mass | | | | | | | 30 | 30 | 30 | 30 | 30 | 30 | 30 |
| | Unsaturated Nitrile Monomer Unit Content in Chloroprene-based Rubber | | | mass% | 10 | 10 | 10 | 10 | 10 | 10 | 5 | 5 | 5 | 5 | 5 | 5 | 5 |
| | Epichlorohydrin-based Rubber | | EPICHLOMER CG-102 (Ethylene Oxide 56 mol%) | parts by mass | 10 | 20 | 40 | 60 | 80 | 90 | 40 | 40 | 40 | 40 | 40 | 40 | 40 |
| | | | HydrinT3102 (Ethylene Oxide 35 mol%) | parts by mass | | | | | | | | | | | | | |
| | | | EPICHLOMER D (Ethylene Oxide 61 mol%) | parts by mass | | | | | | | | | | | | | |
| | Anti-aging Agent | Compound Having p-Phenylenediamine Structure | Nocrac 6C | parts by mass | 2 | 2 | 2 | 2 | 2 | 2 | 2 | 0.5 | 4 | 10 | | | 2 |
| Formulation | | | Nocrac 810-NA | parts by mass | | | | | | | | | | | 2 | | |
| | | | Nocrac G-1 | parts by mass | | | | | | | | | | | | 2 | |
| | | Aromatic Secondary Amine Compound (Except for Compound Having p-Phenylenediamine Structure) | Nocrac CD | parts by mass | 2 | 2 | 2 | 2 | 2 | 2 | 2 | 2 | 2 | 2 | 2 | 2 | |
| | Acid Acceptor | Hydrotalcite Compound | DHT-4A | parts by mass | 8 | 8 | 8 | 8 | 8 | 8 | 8 | 8 | 8 | 8 | 8 | 8 | 8 |
| | | Magnesium-aluminum-based Solid Solution | KW-2100 | parts by mass | | | | | | | | | | | | | |
| | | Magnesium Oxide | Kyowa Mag 150 | parts by mass | | | | | | | | | | | | | |
| | | Zinc Oxide | Zinc Oxide Type 2 | parts by mass | 3 | 3 | 3 | 3 | 3 | 3 | 3 | 3 | 3 | 3 | 3 | 3 | 3 |
| | Vulcanization Accelerator | | Axel 22S | parts by mass | 1.4 | 1.4 | 1.4 | 1.4 | 1.4 | 1.4 | 1.4 | 1.4 | 1.4 | 1.4 | 1.4 | 1.4 | 1.4 |
| | | | Rhenopran MTT-80 | parts by mass | | | | | | | | | | | | | |
| | | | Nocrac MB | parts by mass | | | | | | | | | | | | | |
| | Vulcanization Retarder | | Nocceler TBZTD | parts by mass | 1.2 | 1.2 | 1.2 | 1.2 | 1.2 | 1.2 | 1.2 | 1.2 | 1.2 | 1.2 | 1.2 | 1.2 | 1.2 |
| | Filler | I Carbon Black | FEF | parts by mass | 45 | 45 | 45 | 45 | 45 | 45 | 45 | 45 | 45 | 45 | 45 | 45 | 45 |
| | Plasticizer | | RS-700 | parts by mass | 10 | 10 | 10 | 10 | 10 | 10 | 10 | 10 | 10 | 10 | 10 | 10 | 10 |
| | Lubricant and Processing Aid | | Stearic Acid | parts by mass | 1 | 1 | 1 | 1 | 1 | 1 | 1 | 1 | 1 | 1 | 1 | 1 | 1 |
| | | | Sorbitan Monostearate | parts by mass | 1 | 1 | 1 | 1 | 1 | 1 | 1 | 1 | 1 | 1 | 1 | 1 | 1 |
| Evaluation | Processing Safety | | | | B | B | B | B | B | B | B | B | B | C | B | B | B |
| | Processability | | | | A | A | A | A | A | A | A | A | A | A | A | A | A |
| | Oil Resistance | | | | B | B | A | A | A | A | B | B | B | B | B | B | B |
| | Freeze Resistance | | | | C | C | B | B | A | A | A | A | A | A | A | A | A |
| | Flex Fatigue Resistance | | | | A | A | A | B | C | C | A | C | A | A | A | B | B |
| | Compression Set Resistance | | | | A | A | A | B | C | C | A | A | A | A | A | A | A |
| | Ozone Resistance | | | | A | A | A | A | B | C | A | C | A | A | A | B | A |

**[Table 2]**

| Table 2 | | | | Unit | Example | | | | | | | | | | | |
|---|---|---|---|---|---|---|---|---|---|---|---|---|---|---|---|---|
| | | | | | 14 | 15 | 16 | 17 | 18 | 19 | 20 | 21 | 22 | 23 | 24 | 25 |
| | Chloroprene-based Rubber | Rubber A | Chloroprene-based Rubber A-1 (Acrylonitrile Monomer Unit Content 5%) | parts by mass | | | | | | | | | 60 | | | |
| | | | Chloroprene-based Rubber A-2 (Acrylonitrile Monomer Unit Content 10%) | parts by mass | 30 | 30 | 30 | 30 | 30 | 30 | 30 | 30 | | | | |
| | | | Chloroprene-based Rubber A-3 (Acrylonitrile Monomer Unit Content 15%) | parts by mass | | | | | | | | | | 60 | | |
| | | | Chloroprene-based Rubber A-4 (Acrylonitrile Monomer Unit Content 20%) | parts by mass | | | | | | | | | | | 60 | |
| | | Rubber B | Mercaptan-modified Chloroprene Rubber | parts by mass | 30 | 30 | 30 | 30 | 30 | 30 | 30 | 30 | | | | 60 |
| | Unsaturated Nitrile Monomer Unit Content in Chloroprene-based Rubber | | | mass% | 5 | 5 | 5 | 5 | 5 | 5 | 5 | 5 | 5 | 15 | 20 | 0 |
| | Epichlorohydrin-based Rubber | | EPICHLOMER CG-102 (Ethylene Oxide 56 mol%) | parts by mass | 40 | 40 | 40 | 40 | 40 | 40 | | | 40 | 40 | 40 | 40 |
| | | | HydrinT3102 (Ethylene Oxide 35 mol%) | parts by mass | | | | | | | 40 | | | | | |
| | | | EPICHLOMER D (Ethylene Oxide 61 mol%) | parts by mass | | | | | | | | 40 | | | | |
| | Anti-aging Agent | Compound Having p-Phenylenediamine Structure | Nocrac 6C | parts by mass | 2 | 2 | 2 | 2 | 2 | 2 | 2 | 2 | 2 | 2 | 2 | 2 |
| | | | Nocrac 810-NA | parts by mass | | | | | | | | | | | | |
| | | | Nocrac G-1 | parts by mass | | | | | | | | | | | | |
| Formulation | | Aromatic Secondary Amine Compound (Except for Compound Having p-Phenylenediamine Structure) | Nocrac CD | parts by mass | 2 | 2 | 2 | 2 | 2 | 2 | 2 | 2 | 2 | 2 | 2 | 2 |
| | Acid Acceptor | Hydrotalcite Compound | DHT-4A | parts by mass | 2 | 14 | | | | 8 | 8 | 8 | 8 | 8 | 8 | 8 |
| | | Magnesium-aluminum-based Solid Solution | KW-2100 | parts by mass | | | 8 | | | | | | | | | |
| | | Magnesium Oxide | Kyowa Mag 150 | parts by mass | | | | 4 | 4 | | | | | | | |
| | | Zinc Oxide | Zinc Oxide Type 2 | parts by mass | 3 | 3 | 3 | 3 | 3 | 3 | 3 | 3 | 3 | 3 | 3 | 3 |
| | Vulcanization Accelerator | | Axel 22S | parts by mass | 1.4 | 1.4 | 1.4 | 1.4 | | 1.4 | 1.4 | 1.4 | 1.4 | 1.4 | 1.4 | 1.4 |
| | | | Rhenopran MTT-80 | parts by mass | | | | | 6 | | | | | | | |
| | | | Nocrac MB | parts by mass | | | | | | 1 | | | | | | |
| | Vulcanization Retarder | | Nocceler TBZTD | parts by mass | 1.2 | 1.2 | 1.2 | 1.2 | 0.2 | 1.2 | 1.2 | 1.2 | 1.2 | 1.2 | 1.2 | 1.2 |
| | Filler | I Carbon Black | FEF | parts by mass | 45 | 45 | 45 | 45 | 45 | 45 | 45 | 45 | 45 | 45 | 45 | 45 |
| | Plasticizer | | RS-700 | parts by mass | 10 | 10 | 10 | 10 | 10 | 10 | 10 | 10 | 10 | 10 | 10 | 10 |
| | Lubricant and Processing Aid | | Stearic Acid | parts by mass | 1 | 1 | 1 | 1 | 1 | 1 | 1 | 1 | 1 | 1 | 1 | 1 |
| | | | Sorbitan Monostearate | parts by mass | 1 | 1 | 1 | 1 | 1 | 1 | 1 | 1 | 1 | 1 | 1 | 1 |
| Evaluation | Processing Safety | | | | B | B | B | A | A | B | B | B | B | B | B | B |
| | Processability | | | | B | A | C | C | C | A | A | A | A | A | A | A |
| | Oil Resistance | | | | B | B | B | B | B | B | C | B | B | A | A | C |
| | Freeze Resistance | | | | A | A | A | A | A | A | B | A | A | B | C | A |
| | Flex Fatigue Resistance | | | | A | A | A | A | A | S | A | B | A | A | A | B |
| | Compression Set Resistance | | | | C | A | C | C | C | C | A | A | A | A | A | A |
| | Ozone Resistance | | | | A | A | A | A | A | A | A | B | A | A | A | A |

**[Table 3]**

| Table 3 | | | | Unit | Comparative Example | | | | | | | | |
|---|---|---|---|---|---|---|---|---|---|---|---|---|---|
| | | | | | 1 | 2 | 3 | 4 | 5 | 6 | 7 | 8 | 9 |
| | Chloroprene-based Rubber | Rubber A | Chloroprene-based Rubber A-2 (Acrylonitrile Monomer Unit Content 10%) | parts by mass | 100 | | | 60 | | 60 | 30 | 30 | 30 |
| | | | Chloroprene-based Rubber A-5 (Acrylonitrile Monomer Unit Content 25%) | parts by mass | | | | | 60 | | | | |
| | | Rubber B | Mercaptan-modified Chloroprene Rubber | parts by mass | | | 100 | 40 | | | 30 | 30 | 30 |
| | | Unsaturated Nitrile Monomer Unit Content in Chloroprene-based Rubber | | mass% | 10 | 0 | 0 | 6 | 25 | 5 | 5 | 5 | 5 |
| | Epichlorohydrin-based Rubber | | EPICHLOMER CG-102 (Ethylene Oxide 56 mol%) | parts by mass | | 100 | | | 40 | 40 | 40 | 40 | 40 |
| | Anti-aging Agent | Compound Having p-Phenylenediamine Structure | Nocrac 6C | parts by mass | 2 | 2 | 2 | 2 | 2 | | | | 15 |
| | | Dithiocarbamate-based Compound | Nocrac NBC | parts by mass | | | | | | 2 | | 2 | |
| Formulation | | Aromatic Secondary Amine Compound (Except for Compound Having p-Phenylenediamine Structure) | Nocrac CD | parts by mass | 2 | 2 | 2 | 2 | 2 | 2 | 2 | 2 | 2 |
| | Acid Acceptor | Hydrotalcite Compound | DHT-4A | parts by mass | 8 | 8 | 8 | 8 | 8 | 8 | 8 | 8 | 8 |
| | | Zinc Oxide | Zinc Oxide Type 2 | parts by mass | 5 | | 5 | 5 | 3 | 3 | 3 | 3 | 3 |
| | Vulcanization Accelerator | | Axel 22S | parts by mass | 1.4 | 1.4 | 1.4 | 1.4 | 1.4 | 1.4 | 1.4 | 1.4 | 1.4 |
| | Vulcanization Retarder | | Nocceler TBZTD | parts by mass | 1.2 | 1.2 | 1.2 | 1.2 | 1.2 | 1.2 | 1.2 | 1.2 | 1.2 |
| | Filler | I Carbon Black | FEF | parts by mass | 45 | 45 | 45 | 45 | 45 | 45 | 45 | 45 | 45 |
| | Plasticizer | | RS-700 | parts by mass | 10 | 10 | 10 | 10 | 10 | 10 | 10 | 10 | 10 |
| | Lubricant and Processing Aid | | Stearic Acid | parts by mass | 1 | | 1 | 1 | 1 | 1 | 1 | 1 | 1 |
| | | | Sorbitan Monostearate | parts by mass | | 3 | | | 1 | 1 | 1 | 1 | 1 |
| Evaluation | Processing Safety | | | | B | B | B | B | B | B | B | B | D |
| | Processability | | | | A | A | A | A | A | A | A | A | A |
| | Oil Resistance | | | | B | A | D | D | A | A | B | B | B |
| | Freeze Resistance | | | | D | A | A | D | D | C | A | A | A |
| | Flex Fatigue Resistance | | | | A | D | B | A | A | D | D | D | A |
| | Compression Set Resistance | | | | A | D | A | A | A | A | A | A | A |
| | Ozone Resistance | | | | A | D | A | A | A | B | D | B | A |

## Claims

1. A rubber composition, containing a chloroprene-based rubber and an epichlorohydrin-based rubber, wherein:
the rubber composition contains 5 to 95 parts by mass of the chloroprene-based rubber, 5 to 95 parts by mass of the epichlorohydrin-based rubber, and 0.1 to 10 parts by mass of a compound having a p-phenylenediamine structure, when an amount of a rubber contained in the rubber composition is taken as 100 parts by mass; and
the chloroprene-based rubber contains a chloroprene-based rubber having a content of an unsaturated nitrile monomer unit of less than 25 mass%.

2. The rubber composition of Claim 1, wherein the compound having a p-phenylenediamine structure is represented by the following formula (1): 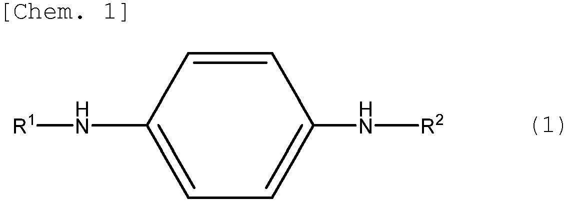 wherein R¹ and R² each represent an organic group, and at least one of R¹ and/or R² comprises an aromatic ring structure.

3. The rubber composition of Claim 1 or 2, wherein the compound having a p-phenylenediamine structure comprises at least one compound selected from a group consisting of N-phenyl-N'-(1,3-dimethylbutyl)-p-phenylenediamine, N-phenyl-N'-isopropyl-p-phenylenediamine, N-1-methylheptyl-N'-phenyl-p-phenylenediamine, N-phenyl-N'-(3-methacryloyloxy-2-hydroxypropyl)-p-phenylenediamine, N,N'-di-2-naphthyl-p-phenylenediamine, N,N'-diphenyl-p-phenylenediamine, p-(p-toluenesulfonylamido)diphenylamine, and N-cyclohexyl-N'-phenyl-p-phenylenediamine.

4. The rubber composition of Claim 1 or 2, wherein the unsaturated nitrile monomer unit is an acrylonitrile monomer unit.

5. The rubber composition of Claim 1 or 2, wherein:
the chloroprene-based rubber contains a rubber A and a rubber B;
the rubber A is a rubber having 1 to 20 mass% of the unsaturated nitrile monomer unit, 60 to 99 mass% of a chloroprene monomer unit, and 0 to 20 mass% of a monomer unit other than chloroprene monomer and unsaturated nitrile monomer; and
the rubber B is a rubber having 80 to 100 mass% of the chloroprene monomer unit and 0 to 20 mass% of the monomer unit other than chloroprene monomer and unsaturated nitrile monomer.

6. The rubber composition of Claim 1 or 2, containing 20 to 99 mass% of the rubber A and 1 to 80 mass% of the rubber B when an amount of the chloroprene-based rubber contained in the rubber composition is taken as 100 mass%.

7. The rubber composition of Claim 1 or 2, wherein the epichlorohydrin-based rubber contains 5 to 90 mol% of an ethylene oxide monomer unit.

8. The rubber composition of Claim 1 or 2, containing 0.1 to 20 parts by mass of an acid acceptor when the amount of the rubber contained in the rubber composition is taken as 100 parts by mass, wherein the acid acceptor comprises at least one selected from a group consisting of a hydrotalcite compound, a magnesium-aluminum-based solid solution, zinc oxide, magnesium oxide, lead oxide, trilead tetroxide, iron trioxide, titanium dioxide, and calcium oxide.

9. The rubber composition of Claim 1 or 2, containing at least one compound selected from a group consisting of sulfur, trimethylthiourea, ethylenethiourea, diphenylthiourea, diethylthiourea, dibutylthiourea, 1,3-trimethylene-2-thiourea, and 3-methylthiazolidine-2-thione.

10. The rubber composition of Claim 1 or 2, containing at least one compound selected from a group consisting of 2-mercaptobenzimidazole, 2-mercaptomethylbenzimidazole, and zinc salt of 2-mercaptobenzimidazole.

11. A vulcanizate of the rubber composition of Claim 1 or 2.

12. A vulcanized molded body using the vulcanizate of Claim 11.
